# EUROPÄISCHE PATENTSCHRIFT

(11) **EP 0 805 089 B1**
(45) Veröffentlichungstag und Bekanntmachung des Hinweises auf die Patenterteilung: **09.04.2003**
(21) Anmeldenummer: 97107246.7
(22) Anmeldetag: 01.05.1997
(51) Int. Cl.: B61F 15/28, H01R 39/38, H01R 39/64

(54) **Erdungskontakt**
Earthing contact
Contact de mise à la terre

(30) Priorität: 03.05.1996 DE 19617710
(43) Veröffentlichungstag der Anmeldung: 05.11.1997
(73) Patentinhaber: Schunk Metall und Kunststoff GmbH, D-35435 Wettenberg (DE)
(72) Erfinder: Menz, Bertram, 35578 Wetzlar (DE)
(74) Vertreter: Stoffregen, Hans-Herbert, Dr. Dipl.-Phys.

(56) Entgegenhaltungen:
- CH-A- 106 070
- DE-C- 525 907
- DE-C- 764 358
- FR-A- 1 360 297

## Beschreibung

Die Erfindung bezieht sich auf einen Erdungskontakt zur Übertragung von Strömen zwischen feststehenden Fahrzeugteilen eines Schienen-Fahrzeuges wie elektrischer, dieselelektrischer Lokomotive oder Trieb- und Reisefahrzeug und dessen drehender Radachse umfassend zumindest ein in Richtung der Radachse druckbeaufschlagtes Kontaktelement, das an einer mittelbar oder unmittelbar von der Radachse ausgehenden insbesondere aus Kohlenstoffmaterial bestehenden oder dieses enthaltenden Kontaktfläche anliegt.

Arbeits- und/oder Signalströme von Schienen-Fahrzeugen können über Achswellen und Achsräder zur Fahrschiene und damit zur Energiequelle zurückgeführt werden. Die Übertragung von den feststehenden Fahrzeugteilen auf die drehenden Achsen erfolgt dabei mit speziellen Strombrücken, die üblicherweise als Rückstrom-/Erdungskontakt bezeichnet werden.

Die Wälzlager der Achsen können im Nutzstrom- oder Störstromkreis liegen. Um sie gegen Stromdurchgang und somit gegen Zerstörung zu schützen, muß der Rückstrom-/Erdungskontakt eine niederohmige Brücke bilden. Bei einer über das Lager anstehenden Spannung ab zum Beispiel 0,5 - IV (Fritt-Spannung) beginnt der Stromfluß durch das Lager. Verbunden mit einer sprunghaft ansteigenden Strommenge sinkt der Wert der Übergangsspannung anschließend auf ca. 0,5 V ab.

Rückstrom-/Signalstrom-/Erdungskontakte sollen bei allen Betriebssituationen des Fahrzeuges eine gute und sichere elektrische Verbindung zwischen dem Rückstromanschluß am Fahrzeug und der Radachse auf einem definierten Stromweg herstellen. Ferner muß insbesondere bei einer Signalübertragung sichergestellt sein, daß ein konstanter Übergangswiderstand vorliegt.

Bei einem aus der DE-OS 1 953 043 bekannten Erdungskontakt ist in einem von einer Achse eines elektrischen Schienenfahrzeuges ausgehenden Gehäuse eine Kohlebürste federvorgespannt nicht drehbar gelagert, die gegenüber einer sich drehenden Kontaktscheibe abgestützt ist. Dabei kann die Kohlebürste entweder mittels einer Druckfeder gegen eine Kontaktplatte oder diese mittels einer Zugfeder gegen die Kohlebürste gedrückt werden. Bei der Verwendung einer Druckfeder kann diese gegebenenfalls von einer Scheibe ausgehen, die unmittelbar mit der Achse verbunden ist.

Aus der DD 81 136 ist ein nicht als Erdungskontakt bestimmter Putzklotz bekannt, der mittels eines Hydraulik- oder Pneumatikzylinders an die Lauffläche des Rades eines Schienenfahrzeuges drückbar ist.

Aus der CH 176 524 ist ein elektrisches Schienenfahrzeug mit gummigefedertem Triebrad bekannt. Dabei wird der Arbeitsstrom über eine Kohlebürste abgeleitet, die derart auf eine Radbandage gepresst wird, dass die Kohlebürste gleichzeitig als Reinigungsklotz für die Lauffläche der Radbandage wirkt.

Ein Erdungskontakt der eingangs genannten Art ist der EP 0 582 888 A1 zu entnehmen. Dabei besteht die Kontaktfläche, an der sich die Kohlebürste abstützt, aus Kohlenstoffmaterial oder enthält dieses. Hierdurch ergibt sich u.a. der Vorteil einer Verschleißminderung gegenüber den sonstigen Erdungskontakten.

Der vorliegenden Erfindung liegt das Problem zugrunde, einen Erdungskontakt der eingangs beschriebenen Art so weiterzubilden, daß bei geringer Baugröße und geringem Gewicht eine hohe Wartungsfreundlichkeit gegeben ist, wobei gleichzeitig sichergestellt sein soll, daß das Kontaktelement wie Kohlebürste oder Kohlebürsten im erforderlichen Umfang und flächig an der Kontaktfläche anliegt beziehungsweise anliegen.

Das Problem wird erfindungsgemäß im wesentlichen dadurch gelöst, daß das zumindest eine Kontaktelement über eine mit einem Fluid oder einem fließfähigen Material gefüllte Einrichtung druckbeaufschlagt ist. Dabei ist insbesondere die Einrichtung kontaktelementseitig von einem flexiblen Element wie Membran begrenzt, das beziehungsweise die flächig an dem Kontaktelement anliegt. Durch diese Maßnahmen sind Ungenauigkeiten problemlos auszugleichen, wobei gleichzeitig sichergestellt ist, daß das Kontaktelement wie Kohlebürste beziehungsweise die Kohlebürsten im erforderlichen Umfang und flächig an der Kontaktfläche anliegen. Dadurch, daß die den Druck übertragende Einrichtung mit einem Fluid oder fließfähigem Material füllbar ist, also die Funktion eines Kissens ausübt, ist eine geringe Baugröße möglich. Unabhängig von der Anzahl der auf der Kontaktfläche abgestützten Kontaktelemente wie Kohlebürsten ist nur eine einzige druckbeschlagende Einrichtung wie Kissen notwendig, so daß sich eine konstruktive Vereinfachung bei gleichzeitiger Vergrößerung der erforderlichen Wartungsintervalle ergibt.

Insbesondere sieht die Erfindung vor, daß die Einrichtung als scheibenförmiges Kissen ausgebildet ist, dessen Ober- und Unterseite aus flexiblen Elementen wie Membranen besteht.

Um einen konstruktiven einfachen Aufbau sicherzustellen, ist vorgesehen, daß die Einrichtung einen umlaufenden im Schnitt U-förmigen Rahmen aufweist, in dem innenseitig ein Stützring angeordnet ist, zwischen dem und dem Rahmen die flexiblen Elemente wie Membranen festgelegt wie festgeklemmt sind.

Um im erforderlichen Umfang über die mit einem Fluid und/oder einem fließfähigen Material gefüllte Einrichtung Druck übertragen zu können, wirkt auf das kontaktelementfernliegende flexible Element ein Druckplattenelement, das in Richtung der Einrichtung mittels Federvorspannung kraftbeaufschlagt ist.

Als Fluid kommen insbesondere solche mit einer hohen Kompressibilität wie Flüssigkeiten infrage. Dabei ist insbesondere Glykol zu bevorzugen. Andere geeignete umweltfreundliche fließfähige Stoffe sind ebenfalls geeignet. Als Beispiel seien Bremsflüssigkeit, körnige Güter wie Sand genannt.

Um mit einfachen Maßnahmen die Einrichtung zu befüllen, sieht ein weiterer Vorschlag der Erfindung vor, daß der Rahmen eine innenseitig mit einer Kugel und außenseitig mit einem Verschlußelement wie Schraube verschließbare Füllöffnung aufweist.

Ganz allgemein sollte der Innenraum der zumindest kontaktelementseitig von einer Membran begrenzten Einrichtung über ein im Rahmen eingelassenes Rückschlagventil befüllbar sein.

Zur Realisierung eines einfachen Aufbaus des Rahmen selbst ist vorgesehen, daß dieser sich aus im Schnitt L-förmige Klemmringe zusammensetzt. Der Rahmen selbst kann von einer hohlzylindrischen Halterung aufgenommen sein, von der kontaktelementfernliegend ein Joch ausgeht, welches Abstützung für auf das Druckplattenelement einwirkendes Federelement wie Schraubenfeder ist.

Das Kontaktelement selbst kann aus über Abstandselemente getrennte Kohlebürsten-Segmente bestehen, die von der Kontaktfläche aus betrachtet eine Dreieckform aufweisen. Auch wenn hierin eine bevorzugte Ausführungsform der Kohlebürste zu sehen ist, sind sonstige übliche Kohlebürstenanordnungen ebenfalls anwendbar, um in einem erfindungsgemäßen Erdungskontakt eingebaut zu werden.

Weitere Einzelheiten, Vorteile und Merkmale der Erfindung ergeben sich nicht nur aus den Ansprüchen, denen diesen zu entnehmenden Merkmalen - für sich und/oder in Kombination - sondern auch aus der nachfolgenden Beschreibung eines der Zeichnung zu entnehmenden bevorzugten Ausführungsbeispiels.

Es zeigen:
- Fig. 1: eine Unteransicht eines Erdungskontaktes,
- Fig. 2: einen Schnitt entlang der Linie II in Fig.1 und

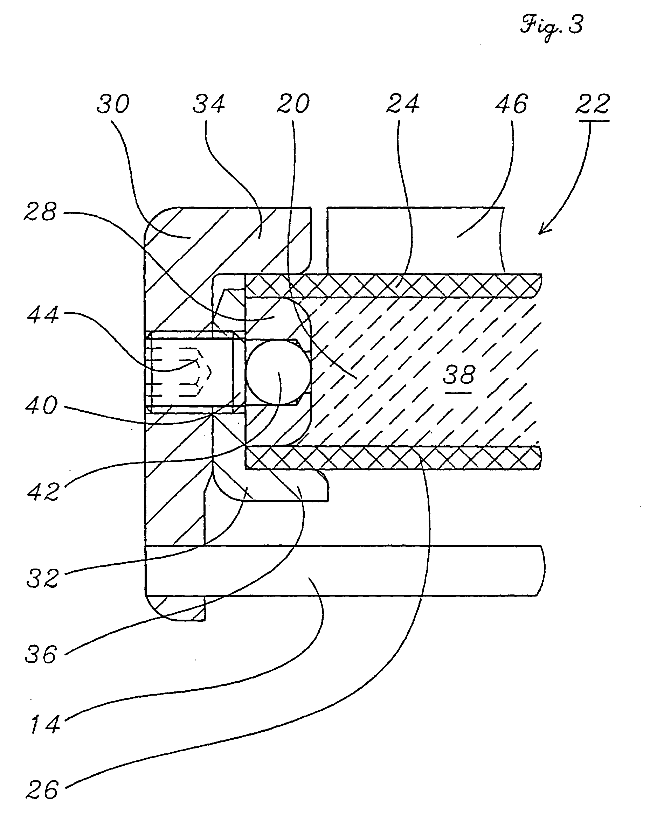

- Fig. 3: eine Detaildarstellung des Erdungskontaktes nach den Fig. 1 und 2.

In den Figuren sind wesentliche Elemente eines Rückstrom-/Signalstrom-/Erdungskontakts dargestellt, mittels dessen Ströme zwischen feststehenden Fahrzeugteilen eines Schienen-Fahrzeuges und dessen drehender Achse übertragen werden sollen. Hierzu geht mittelbar oder unmittelbar von einer nicht dargestellten Drehachse eine vorzugsweise aus Kohlenstoffmaterial bestehende oder dieses enthaltende Kontaktscheibe 10 aus, an der ein in einer von einem feststehenden Fahrzeugteil ausgehenden Halterung gelagertes Kontaktelement 12 anliegt, das im Ausführungsbeispiel aus insgesamt sechs Kohlebürsten 12 besteht, die von der Kontaktscheibe 10 aus betrachtet eine Dreieckform aufweisen und untereinander über Fixieroder Trennstege 14 beabstandet sind. Insoweit kann jedoch auf bekannte Konstruktionen verwiesen werden. Auch wird aus Gründen der Einfachheit nachstehend anstelle von Kontaktelement von Kohlebürsten gesprochen.

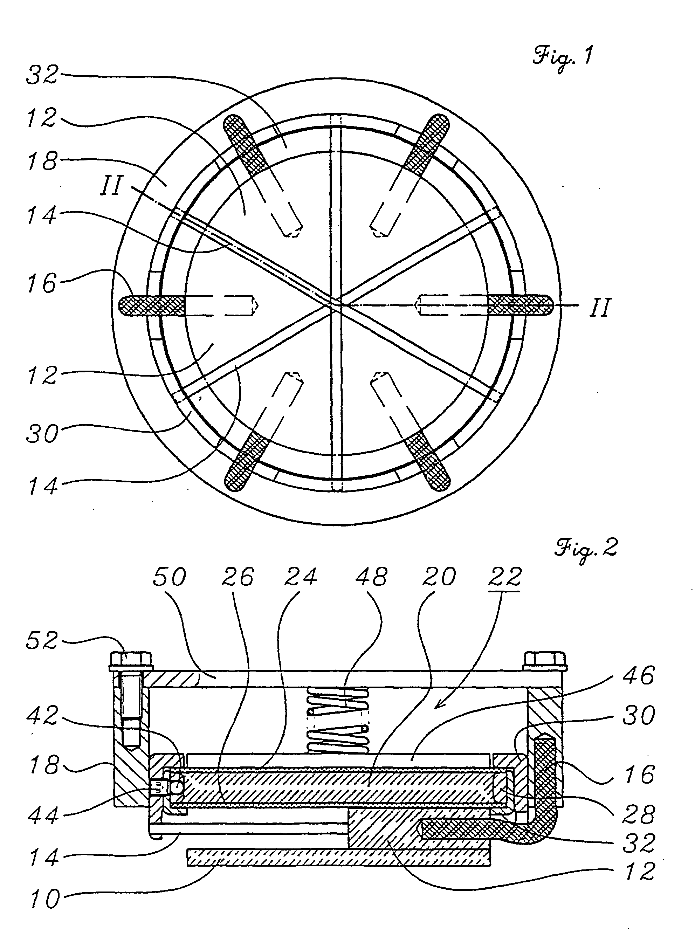

Wie der Schnittdarstellung gemäß Fig. 2 zu entnehmen ist, geht von jeder Kohlebürste 12 ein Stromseil wie Bürstenlitze 16 aus, das bzw. die elektrisch leitend in einem als Kontaktring zu bezeichnenden Hohlzylinder 18 fixiert sind, der gleichzeitig die Funktion einer Lagerbuchse ausüben kann. Der Kontaktring 18 kann sodann in einem Gehäuse befestigt sein, welches mit dem feststehenden Fahrzeugteil verbunden wird. Sonstige übliche Befestigungen beziehungsweise Konstruktionen sind gleichfalls denkbar.

Um sicherzustellen, daß die Kohlebürsten 12 im erforderlichen Umfang und flächig auf der Kontaktscheibe 10 aufliegen, müssen erstere druckbeaufschlagt werden. Hierzu ist erfindungsgemäß eine mit einem Druckmedium wie Flüssigkeit 20 befüllbare und die Funktion eines Kissens ausübende Einrichtung 22 vorgesehen, die nachstehenden Aufbau aufweist.

Die Einrichtung 22 weist eine obere und untere Membrane 24, 26 auf. Umfangseitig sind die Membranen 24, 26 über einen Stützring 28 einerseits beabstandet und andererseits nach außen hin abgedichtet. Das in dem von den Membranen 24 und 26 und dem Stützring 28 begrenzte Volumen kann sodann mit dem Fluid 20 ausgefüllt werden.

Die Membranen 24, 26 mit dem Stützring 28 werden von einem aus einem äußeren Klemmring 30 und einem inneren Klemmring 32 gebildeten Rahmen aufgenommen und fixiert, der seinerseits von dem Kontaktring 18 aufgenommen ist.

Der innere und der äußere Klemmring 30, 32 weisen im Schnitt eine L-Form auf, wobei die Membranen 24, 26 und der Stützring 28 zwischen den entlang der Membranen 24, 26 verlaufenden Schenkeln 34, 36 des äußeren und des inneren Klemmrings 30, 32 verspannt werden.

Um den von den Membranen 24, 26 und dem Stützring 28 begrenzten Innenraum 38 zu befüllen, wird der von den Klemmringen 30, 32 gebildete Rahmen einschließlich dem Stützring 28 von einer Bohrung 40 durchsetzt, die innenraumseitig von einer Kugel 42 und außenseitig von einer Schraube wie Madeschraube 44 verschließbar ist. Hierdurch wird ein Rückschlagventil gebildet.

Auf der kohlebürstenfernliegenden Membran 24 ist eine Druckplatte 46 abgestützt, über die die Einrichtung 22, also die Membranen 24, 26 sowie das von diesen eingesperrte Fluid 20 druckbeaufschlagt wird, um im erforderlichen Umfang die Kohlebürsten 12 auf die Kontaktscheibe 10 zu drücken und einen flächigen Kontakt herzustellen.

Damit über die Druckplatte 46 die erforderliche Druckeinwirkung auf die Membranen 24, 26 und das Fluid 20 einwirken kann, wirkt außenseitig auf die Druckplatte 46 ein Federelement in Form einer Schraubenfeder 48, die an einem Joch 50 abgestützt ist, welches von dem Kontaktring 18 ausgeht und mit diesem über Schrauben 52 verbunden ist.

Über die Druckplatte 46 und dem Fluid 20 erfährt die Membran 26 die erforderliche Druckbeaufschlagung, die auf die Kohlebürsten 12 übertragen wird.

Als Fluid eignet sich insbesondere ein solches hoher Kompressibilität, also eine Flüssigkeit wie insbesondere Glykol. Das Fluid sollte in dem Volumen 38 ohne Lufteinschlüsse eingefüllt sein.

Durch die kissenförmig ausgebildete Einrichtung 22 ergibt sich ein überaus kompakter Aufbau, so daß der Erdungskontakt eine geringe Baugröße aufweist. Gleichzeitig ergeben sich Gewichtsvorteile. Auch ist aufgrund des konstruktiv einfachen Aufbaus eine hohe Wartungsfreundlichkeit gegeben.

Selbstverständlich ist es nicht erforderlich, daß die Einrichtung zu beiden Seiten mit einer Membran begrenzt ist. Vielmehr reicht eine Membran aus, die an dem Kontaktelement anliegt.

## Patentansprüche

1. Erdungskontakt zur Übertragung von Strömen zwischen feststehenden Fahrzeugteilen eines Schienen-Fahrzeuges wie elektrischer, dieselelektrischer oder dieselhydraulischer Lokomotive oder Trieb- und Reisefahrzeug und dessen drehender Radachse umfassend zumindest ein in Richtung der Radachse druckbeaufschlagtes Kontaktelement wie Kohlebürste (12), das bzw. die an einer mittelbar oder unmittelbar von der Radachse ausgehenden insbesondere aus Kohlenstoffmaterial bestehenden oder dieses enthaltenden Kontaktfläche anliegt,
**dadurch gekennzeichnet,**
**dass** das zumindest eine Kontaktelement (12) über eine mit einem Fluid (20) oder einem fließfähigen Material gefüllte Einrichtung (22) druckbeaufschlagt ist.

2. Erdungskontakt nach Anspruch 1,
**dadurch gekennzeichnet,**
**dass** die Einrichtung (22) kontaktelementseitig von einem flexiblen Element wie Membran (26) begrenzt ist, das beziehungsweise die flächig an dem Kontaktelement wie Kohlebürste (12) anliegt.

3. Erdungskontakt nach Anspruch 1 oder 2,
**dadurch gekennzeichnet,**
**dass** die Einrichtung (22) eine scheibenförmige Geometrie mit zumeist aus einem flexiblen Element (24, 26) bestehender Unterseite, insbesondere mit aus flexiblen Elementen bestehender Unter- und Oberseite aufweist.

4. Erdungskontakt nach zumindest einem der vorhergehenden Ansprüche,
**dadurch gekennzeichnet,**
**dass** die Einrichtung (22) einen umlaufenden im Schnitt U-förmigen Rahmen (30, 32) aufweist, in dem innenseitig ein Stützring (28) angeordnet ist, zwischen dem und dem Rahmen flexible Elemente wie Membranen (24, 26) festgelegt wie festgeklemmt sind.

5. Erdungskontakt nach zumindest einem der vorhergehenden Ansprüche,
**dadurch gekennzeichnet,**
**dass** auf das kontaktelementfernliegende flexible Element wie Membran (24) ein Druckplattenelement (46) einwirkt, das in Richtung der Einrichtung (22) vorzugsweise mittels Federvorspannung kraftbeaufschlagt ist.

6. Erdungskontakt nach zumindest einem der vorhergehenden Ansprüche,
**dadurch gekennzeichnet,**
**dass** das Kontaktelement eine Kohlebürste (12) ist, die aus über Abstandselemente (14) getrennten von der Kontakfläche (10) aus betrachtet vorzugsweise dreieckförmigen Segmenten besteht, wobei vorzugsweise sämtliche an der Kontaktfläche anliegenden Kontaktelemente wie Kohlebürsten beziehungsweise deren Segmente von einer einzigen mit dem Fluid oder dem fließfähigen Material gefüllten Einrichtung (22) druckbeaufschlagt sind.

7. Erdungskontakt nach zumindest einem der vorhergehenden Ansprüche,
**dadurch gekennzeichnet,**
**dass** ein von den flexiblen Elementen wie Membranen (24, 26) und dem Stützring (28) begrenzter Raum (38) mit dem Fluid (20) hoher Kompressibilität wie Glykol, Öl, Sand gefüllt ist oder dieses enthält, wobei vorzugsweise das Fluid lufteinschlußfrei in dem Raum eingefüllt ist, der gegebenenfalls über ein Rückschlagventil befüllbar ist, insbesondere der den Raum begrenzende Rahmen einen innenseitig mit einer Kugel (42) und außenseitig mit einem Verschlusselement wie Schraube 840) verschießbare Füllöffnung (40) aufweist.

8. Erdungskontakt nach zumindest einem der vorhergehenden Ansprüche,
**dadurch gekennzeichnet,**
**dass** der Rahmen aus einem äußeren im Schnitt L-förmigen Klemmring (30) und einem inneren im Schnitt L-förmigen Klemmring (32) besteht, insbesondere der Rahmen eine offene Topfform mit sich entlang ihrer Öffnung erstreckender Membran aufweist, die über einen Klemmring fixierbar ist.

9. Erdungskontakt nach zumindest einem der vorhergehenden Ansprüche,
**dadurch gekennzeichnet,**
**dass** die Membranen (24, 26) peripher zwischen dem Stützring (28) und entlang der Membranen verlaufenden Schenkeln (34, 36) des äußeren beziehungsweise inneren Klemmrings (30, 32) abgedichtet angeordnet sind.

10. Erdungskontakt zur Übertragung von Strömen zwischen feststehenden Fahrzeugteilen eines Schienen-Fahrzeuges, insbesondere einer elektrischen, dieselelektrischen oder dieselhydraulischen Lokomotive oder eines Trieb- oder Reisefahrzeugs, und dessen drehender Radachse, bestehend aus zumindest einem in Richtung der Radachse druckbeaufschlagten Kontaktelement (12), das an einer mittelbar oder unmittelbar von der Radachse ausgehenden, insbesondere aus Kohlenstoffmaterial bestehenden oder dieses enthaltenden, Kontaktfläche anliegt,
**dadurch gekennzeichnet, dass**
- das zumindest eine Kontaktelement (12) über eine mit einem Fluid (20) oder einem fließfähigen Material gefüllte, scheibenförmige Einrichtung (22) druckbeaufschlagt ist,
- die Einrichtung (22) kontaktelementseitig von einem flexiblen Element (26) begrenzt ist, das flächig an dem Kontaktelement (12) anliegt,
- auf die kontaktelementfernliegende Seite der Einrichtung (22) ein in Richtung des Kontaktelementes (12) mittels Federspannung beaufschlagtes Druckplattenelement (46) einwirkt.

## Claims

1. Grounding contact for transfer of currents between fixed vehicle elements of a rail vehicle as electric, Diesel-electric or Diesel-hydraulic locomotive or self-propelled and long-distance vehicle and its rotating wheel axle comprising at least one contact element as carbon brush (12) acted upon by pressure in the direction toward the wheel axle and which rests on a contact surface originating directly or indirectly from the wheel axle and consisting of carbon material or containing it
**wherein**
the at least one contact element (12) is acted upon by the pressure of a device (22) filled with a fluid (20) or flowable material.

2. Grounding contact according to claim 1,
**wherein**
on the contact element side the device (22) is delimited by a flexible element as membrane (26) which rests flat against the contact element as carbon brush (12).

3. Grounding contact according to claim 1 or 2,
**wherein**
the device (22) has a disk-like geometry with a lower side usually consisting of a flexible element (24, 26), in particular with a lower and upper side consisting of flexible elements.

4. Grounding contact according to at least one of the preceding claims,
**wherein**
the device (22) has a circumferential frame (30, 32) which is U-shaped in cross section, on the inside of which a support ring (28) is disposed, between which and the frame flexible elements as membranes (24, 26) are fixed in place, for example clamped.

5. Grounding contact according to at least one of the preceding claims,
**wherein**
the flexible element as membrane (24) remote from the contact element is acted upon by a pressure plate element (46) which is acted upon by force preferably via spring prestress in direction toward the device (22).

6. Grounding contact according to at least one of the preceding claims,
**wherein**
the contact element is a carbon brush (12) consisting of segments having preferably a triangular shape separated by means of spacer elements (14) viewed from the direction of the contact surface (10), with preferably all contact elements as carbon brushes or their segments resting on the contact surface are acted upon by pressure from a single device (22) filled with the fluid or the flowable material.

7. Grounding contact according to at least one of the preceding claims,
**wherein**
a chamber (38) delimited by the flexible elements (24, 26) and the support ring (28) is filled with the fluid (20) having a high compressibility like glycol, oil or sand or contains the same, and preferably the fluid is filled free of entrained air into the chamber which can eventually be filled via a non-return valve and in particular the frame delimiting the chamber has a filler opening (40) which can be closed in the interior by means of a ball (42) and on the exterior by means of a closure element as screw 840).

8. Grounding contact according to at least one of the preceding claims,
**wherein**
the frame consists of an exterior clamping ring (30), L-shaped in cross section, and an interior clamping ring (32), L-shaped in cross section, in particular the frame shows an open cup shape having a membrane extending along its opening, which can be fixed in place by means of a clamping ring.

9. Grounding contact according to at least one of the preceding claims,
**wherein**
the membranes (24, 26) are disposed in a sealed manner peripherally between the support ring (28) and legs (34, 36), extending along the membranes, of the exterior or interior clamping ring (30, 23).

10. Grounding contact for the transfer of currents between fixed vehicle elements of a rail vehicle, in particular an electric, Diesel-electric or Diesel-hydraulic locomotive or of a self-propelled or long-distance vehicle and its rotating wheel axle, consisting of at least one contact element (12) acted upon by pressure in the direction toward the wheel axle, which rests on a contact surface originating directly or indirectly from the wheel axle and particularly consisting of carbon material or containing it
**wherein**
- the at least one contact element (12) is acted upon by pressure of a disc-shaped device (22) filled with a fluid (20) or with a flowable material,
- on the contact element side the device (22) is delimited by a flexible element (26) which rests flat against the contact element (12),
- a pressure plate element (46) acted upon by means of spring tension acts in the direction toward the contact element (12) on the side of the device (22) remote from the contact element.

## Revendications

1. Contact de mise à la terre pour transmettre des courants entre des parties de véhicule fixes d'un véhicule sur rails comme une locomotive ou un véhicule de traction ou pour voyageurs, électrique, diesel-électrique ou diesel-hydraulique, et son essieu tournant, comprenant au moins un élément de contact alimenté en pression en direction de l'essieu comme un balai de charbon (12), lequel contact ou balai est appliqué sur une surface de contact, partant directement ou indirectement de l'essieu, composée en particulier d'un matériau en carbone ou qui contient du carbone,
**caractérisé en ce que**
l'élément de contact (12) au moins unique est alimenté en pression par une installation (22) remplie d'un fluide (20) ou d'un matériau susceptible de couler.

2. Contact de mise à la terre selon la revendication 1,
**caractérisé en ce que**
l'installation (22) est limitée du côté de l'élément de contact par un élément flexible comme une membrane (26), lequel élément ou membrane est appliqué à plat sur l'élément de contact comme un balai de charbon (12).

3. Contact de mise à la terre selon la revendication 1 ou 2,
**caractérisé en ce que**
l'installation (22) présente une géométrie en forme de disque avec un côté inférieur constitué principalement d'un élément flexible (24, 26), en particulier avec un côté inférieur et supérieur constitués d'éléments flexibles.

4. Contact de mise à la terre selon au moins l'une des revendications précédentes,
**caractérisé en ce que**
l'installation (22) présente un cadre (30, 32) périphérique à section en U à l'intérieur duquel est placée une bague d'appui (28) entre laquelle et le cadre sont fixés ou bloqués des éléments flexibles comme des membranes (24, 26).

5. Contact de mise à la terre selon au moins l'une des revendications précédentes,
**caractérisé en ce qu'**
un élément de plaque de serrage (46), qui en direction de l'installation (22) est alimenté en force de préférence au moyen d'une prétension de ressort, agit sur l'élément flexible, comme une membrane (24), placé à distance de l'élément de contact.

6. Contact de mise à la terre selon au moins l'une des revendications précédentes,
**caractérisé en ce que**
l'élément de contact est un balai de charbon (12) qui se compose de segments de préférence triangulaires séparés par des d'éléments d'écartement (14) vus depuis la surface de contact (10), tous les éléments de contact, comme des balais de charbon ou leurs segments appliqués sur la surface de contact, étant de préférence alimentés en pression par une unique installation (22) remplie d'un fluide ou d'un matériau susceptible de couler.

7. Contact de mise à la terre selon au moins l'une des revendications précédentes,
**caractérisé en ce qu'**
un espace (38) limité par les éléments flexibles comme des membranes (24, 26) et par la bague d'appui (28) est rempli du fluide (20) présentant une compressibilité élevée comme du glycol, de l'huile, du sable ou le contient, le fluide exempt d'inclusions d'air étant de préférence amené dans l'espace qui éventuellement peut être rempli par un clapet anti-retour, le cadre qui limite l'espace présentant en particulier une ouverture de remplissage (40) qu'on peut fermer à l'intérieur avec une sphère (42) et à l'extérieur avec un élément de fermeture comme une vis (44).

8. Contact de mise à la terre selon au moins l'une des revendications précédentes,
**caractérisé en ce que**
le cadre est constitué d'une bague de serrage (30) extérieure à section en L et d'une bague de serrage (32) intérieure à section en L, le cadre présente en particulier une forme de creuset ouvert avec une membrane qui s'étend le long de son ouverture et qui peut être fixée au moyen d'une bague de serrage.

9. Contact de mise à la terre selon au moins l'une des revendications précédentes,
**caractérisé en ce que**
les membranes (24, 26) sont disposées de façon étanche à la périphérie entre la bague d'appui (28) et des branches (34, 36), qui s'étendent le long des membranes, de la bague de serrage (30, 32) extérieure ou intérieure.

10. Contact de mise à la terre pour transmettre des courants entre des parties de véhicules fixes d'un véhicule sur rails, en particulier d'une locomotive ou d'un véhicule de traction ou de voyageurs, électrique, die-sel-électrique ou diesel-hydraulique, et son essieu tournant, comprenant au moins un élément de contact alimenté en pression en direction de l'essieu (12) qui est appliqué sur une surface de contact, partant directement ou indirectement de l'essieu, composée en particulier d'un matériau en carbone ou qui contient du carbone,
**caractérisé en ce que**
- l'élément de contact (12) au moins au nombre d'un est alimenté en pression par une installation (22) en forme de disque remplie d'un fluide (20) ou d'un matériau susceptible de couler,
- l'installation (22) est limitée du côté de l'élément de contact par un élément flexible (26) qui est appliqué à plat sur l'élément de contact (12),
- un élément de plaque de serrage (46), chargé au moyen d'une tension de ressort en direction de l'élément de contact (12), agit sur le côté de l'installation (22) éloigné de l'élément de contact.
